# DEMANDE DE BREVET EUROPEEN

(11) **EP 1 362 834 A1**
(43) Date de publication de la demande: **19.11.2003**
(21) Numéro de dépôt: 02076779.4
(22) Date de dépôt: 06.05.2002
(51) Int. Cl.: C03C 17/34, C03C 17/36

(54) **Substrat transparent comportant une couche conductrice**

(71) Demandeur: GLAVERBEL, 1170 Bruxelles (BE)
(72) Inventeur: Hevesi, Kadosa, 6040 Jumet (BE)
(74) Mandataire: Vandeberg, Marie-Paule

(57) **Abrégé**

Un substrat transparent, notamment en verre, revêtu d'un empilage de couches est décrit. Cet empilage comporte lors du dépôt, au moins :
une couche conductrice à base d'un oxyde métallique, en particulier un oxyde métallique dopé et/ou sous forme sous-stoéchiométrique, et
une couche de protection choisie parmi les oxydes, les oxynitrures ou les nitrures de métaux. Il peut encore comporter une sous-couche ainsi qu'une fine couche métallique, sous la couche de protection.

Les couches sont déposées par un procédé sous-vide, en particulier de type pulvérisation cathodique magnétron.

## Description

La présente invention concerne un substrat transparent, notamment en verre, revêtu d'un empilage comportant au moins une couche transparente conductrice déposée par un procédé sous-vide. L'invention concerne aussi un procédé de fabrication d'un tel substrat revêtu ainsi que son utilisation dans un vitrage chauffant et le vitrage obtenu.

Pour être utilisable comme vitrage chauffant, en particulier dans le domaine automobile, le substrat doit résister aux trempes et déformations mécaniques nécessaires à la mise en forme (bombage) des pare-brise, lunettes arrière, et autres vitres de voitures. Les températures atteintes lors de ces traitements sont de l'ordre de 650°C, voire jusqu'à 680°C. Il est encore important que le substrat revêtu présente une bonne durabilité dans le temps, l'empilage devant pouvoir résister à une exposition à l'atmosphère ambiante et aux divers détergents de nettoyage ainsi qu'aux contraintes mécaniques de type frottement ou griffes.

On connaît des couches semi-conductrices à base d'oxyde métallique à usage anti-statique, destinées à éviter les effets indésirables liés à l'accumulation de charges électrostatiques. La conductivité de ces couches est faible. Leur résistance de surface atteint des valeurs de l'ordre de 10 ⁵ Ohms/carré. (EP 229 509)

On connaît des couches basse émissives et conductrices transparentes déposées par voie pyrolytique (en phase liquide ou vapeur) telles que l'oxyde d'étain dopé au fluor, SnO2 : F ou dopé à l'antimoine, SnO2 : Sb. Toutefois, la conductivité de ces couches n'est pas suffisante pour les rendre efficace comme couche chauffante, leur résistance de surface étant généralement supérieure à 60 Ω/□.

Les procédés de dépôt par voie pyrolytique présentent les inconvénients suivants : peu de souplesse de production, ils sont en effet liés à une installation de production de verre en ligne ; le nombre de couches qu'il est possible de déposer est plus limité que par procédé sous vide ; ils ne permettent pas de déposer une aussi grande diversité de matériaux qu'avec les procédés sous vide.

Des méthodes pour déposer, par pulvérisation cathodique, des couches d'oxyde de zinc dopé à l'Al ou à l'In (ZnO :Al ou ZnO : In) sont connues (B. Szyszka & Al. : « Optical and electrical properties of doped zinc oxide films prepared by ac reactive magnetron sputtering » J. of Non-Crystalline Solids 218). Les couches ainsi déposées présentent des résistivités de l'ordre de 3 ou 4 . 10⁻⁴ Ohm.cm. Ces couches ne sont pas résistantes à un traitement thermique du type trempe ou bombage. Lorsque l'on soumet un substrat en verre revêtu d'une telle couche à un traitement thermique à l'air de l'ordre 500 à 650 °C, on a observé une dégradation de la conductivité ainsi que l'apparition de défauts optiques, telle que des taches blanchâtres, *etc....*

Il existe donc un besoin de disposer de substrats transparents, notamment en verre minéral, revêtus d'une couche chauffante déposée par un procédé sous-vide et qui résistent à des traitements thermiques de type trempe ou bombage. De telles couches présentent avantageusement, après traitement thermique, une résistance électrique la plus faible possible tout en conservant des propriétés optiques appropriées (telles que, par exemple, transmission lumineuse (TL) élevée (en particulier supérieure à 30%) et homogène, réflexion lumineuse (RL) faible).

On recherche donc un revêtement possédant une bonne conductivité tout en conservant une transmission lumineuse élevée. Pour des applications comme pare-brise, des TL supérieures à 70 % voire 75 % sont nécessaires. Pour des applications comme lunette arrière de véhicules, des TL plus faibles (jusqu'à 30-35% par exemple), sont acceptables.

La résistance étant fonction de la résistivité (ρ) et de l'épaisseur (e) de la couche conductrice (R= ρ / e), pour diminuer la résistance, on pourrait être tenté d'augmenter fortement l'épaisseur de la couche conductrice. Toutefois, pour des raisons économiques et de transmission lumineuse, le revêtement doit rester dans des épaisseurs raisonnables.

Il a été découvert de manière surprenante, qu'il est possible d'obtenir des couches déposées par un procédé sous vide, conservant une résistance de surface faible même après traitement thermique, par l'application d'au moins une sur-couche de protection de type oxyde, nitrure ou oxynitrure de métal.

La présente invention a pour objet un substrat transparent, notamment en verre, revêtu d'un empilage de couches, cet empilage comportant, avant traitement thermique, au moins une couche conductrice à base d'un oxyde métallique, déposée par procédé sous vide, en particulier par sputtering magnétron, et au moins une couche de protection chimique et mécanique, choisie parmi les oxydes de métaux, les oxynitrures de métaux ou les nitrures de métaux.

Avantageusement, la conductivité est encore améliorée par l'ajout, entre la couche conductrice et la couche de protection, d'une fine couche métallique.

De même, la durabilité chimique de l'empilage peut être améliorée par l'ajout d'une couche métallique finale. Cette couche est suffisamment fine pour pouvoir s'oxyder lors du traitement thermique et suffisamment épaisse pour assurer une bonne durabilité chimique à l'empilage.

Avantageusement, l'oxyde métallique de la couche conductrice est dans un état sous-stoéchiométrique et est, de préférence, dopé. Il peut être choisi, en particulier, parmi l'oxyde de zinc dopé avec un élément choisi parmi l'aluminium, le fluor, le gallium, l'étain, l'indium, l'antimoine, ou les mélanges de ces éléments ou l'oxyde d'étain dopé avec un élément choisi parmi l'aluminium, le fluor, le gallium, l'indium, l'antimoine ou les mélanges de ces éléments.

La concentration atomique en élément dopant dans la couche conductrice est avantageusement d'au minimum 0.5 % et de préférence comprise entre 1 et 10 %, de manière encore préférée entre 1 et 2 %.

En particulier, l'épaisseur de la couche conductrice est comprise entre 50 et 5000 nm, de préférence entre 300 et 1200 nm et de manière encore préférée entre 400 et 1100 nm. L'épaisseur de la fine couche métallique, quant à elle, est avantageusement comprise entre 0.5 et 15 nm, de préférence entre 1 et 10 nm et de manière encore préférée entre 1.5 et 6 nm. La couche métallique doit en fait être suffisamment fine pour qu'elle s'oxyde pratiquement totalement lors du traitement thermique mais suffisamment importante pour assurer une protection de la couche conductrice.

L'élément métallique de la fine couche métallique telle que déposée peut être choisi parmi Ti, Ni, Cr, Zn, Sn, Si, Zr, Al, In, Nb, Ta, Ce, Bi, Hf et les alliages de ces éléments. D'autres éléments métalliques pourraient toutefois encore être envisagés, en particulier, tous éléments dont l'oxydation donne une forme oxydée stable, dure et susceptible de résister aux atmosphères corrosives.

La couche de protection, telle que déposée, est en particulier choisie parmi les oxydes, les nitrures et les oxynitrures de titane, d'aluminium, de silicium, de zinc, d'étain, d'indium, de molybdène, de bismuth, de tantale, de cérium, de niobium, de zirconium, ou de tungstène. Après dépôt, la nature de la couche peut se modifier. On a en effet constaté qu'elle s'oxyde partiellement ou totalement lors du recuit.

Toutes autres couches de protection susceptibles de résister aux détergents, aux conditions atmosphériques et/ou à la dégradation mécanique pourraient encore être envisagées.

L'épaisseur de la couche de protection est en particulier comprise entre 10 nm et 300 nm, de préférence entre 45 et 180 nm et de manière encore préférée entre 50 et 100 nm.

Avantageusement, l'empilage comporte une sous-couche dont la nature lors du dépôt peut être choisie parmi les oxydes, les nitrures et les oxynitrures de titane, d'aluminium, de silicium, de zinc, d'étain, d'indium, de molybdène, de bismuth, de tantale, de cérium, de niobium, de zirconium, ou de tungstène. Cette sous-couche a notamment pour but de protéger la couche conductrice de la migration d'éléments contenus dans le verre, tels que l'oxygène, les ions alcalins, etc.

La présente invention a également pour objet un procédé de fabrication d'un substrat transparent revêtu d'un empilage conducteur, caractérisé par les étapes suivantes :
a) on dépose par un procédé de dépôt sous vide une couche conductrice à base d'un oxyde métallique,
b) on dépose par un procédé de dépôt sous vide une couche protectrice,
c) on soumet le substrat à un traitement thermique, en particulier de type trempe, bombage, ou recuit à haute température, qui, entre autre effet, modifie la structure cristalline de la couche conductrice et permet d'augmenter sa conductivité.

De manière avantageuse, on dépose également une sous-couche telle que décrite ci-dessus. On dépose également de manière avantageuse une fine couche métallique entre la couche conductrice et la couche protectrice.

La technique de dépôt est avantageusement une pulvérisation cathodique de type magnétron.

En particulier, la couche conductrice est déposée en réglant les conditions de mélanges de gaz et en se positionnant dans la zone de transition métallique-réactif, de manière telle que l'on obtienne une couche stoéchiométriquement sous oxydée.

La présente invention a également pour objet l'utilisation, en tant que vitrage chauffant, d'un substrat transparent tel que décrit dans la présente demande et/ou obtenu selon le procédé décrit dans la présente demande. Grâce à l'utilisation de connecteurs électriques appropriés, le substrat décrit ci-dessus peut entrer dans la fabrication d'un vitrage ayant des fonctions de désembuage et de dégivrage, voire de chauffage dans le domaine architectural.

L'objet de la présente invention s'étend donc aux vitrages comportant un substrat revêtu d'un empilage comportant au moins une couche conductrice à base d'un d'oxyde métallique, déposée par un procédé sous-vide, qui présente une résistance de surface inférieure à 60 Ohms par carré, de préférence inférieure à 55 Ohms/carré et de manière encore préférée inférieure à 35, voire 15 Ohms/carré.

Selon certains modes d'exécution, cette résistance est combinée à une haute transmission lumineuse (supérieure à 70 %, de préférence supérieure à 75 voire 80 %). Selon d'autres modes d'exécution, des transmissions lumineuses supérieures à 30, voire 35 % sont recherchées. C'est en particulier le cas lorsqu'on utile un substrat transparent coloré.

D'autres applications peuvent encore être envisagées pour le substrat décrit, par exemple dans le domaine des électrochromes, des écrans tactiles et filtres électromagnétiques pour écrans.

La présente invention est illustrée de manière non limitative par les exemples de réalisation ci-dessous.

### Exemple 1 :

Un empilage verre / AlN / ZnO:Al / Ti / AlN est réalisé par pulvérisation cathodique magnétron, sur un substrat de verre minéral clair de type sodo-calcique de 2 mm d'épaisseur. Des essais de traitements thermiques à différentes températures et des tests de vieillissement ont ensuite été réalisés.

Les conditions de dépôt des différentes couches constituant l'empilage sont les suivantes.

Une première couche de nitrure d'aluminium est déposée sur le substrat à partir d'une cible d'aluminium dans une atmosphère d'azote pur. Le courant appliqué est de 4 Ampères pour une tension de 300 Volt. La pression est de 5 mTorr. L'épaisseur du dépôt est de l'ordre de 900 Å.

La couche conductrice d'oxyde de zinc dopé à l'aluminium est réalisée à partir d'une cible unique de zinc dopée 2% Al dans une atmosphère argon-oxygène afin d'obtenir la sous stoechiométrie nécessaire. La sous-stoéchiométrie est obtenue en opérant la pulvérisation dans la zone de transition métallique-réactif. L'introduction des gaz est contrôlée par le système de régulation piézo-électrique, piloté par une boucle de contrôle qui exploite l'émission lumineuse du plasma. Le signal de référence utilisé est dans ce cas la raie d'émission du zinc à 215 nm. Une couche continue est formée dont l'épaisseur est de l'ordre de 5000 Å.

Une couche de titane est déposée dans l'argon pur. Le courant est de 4 A pour une tension de 295 V et une pression de 5 mtorr. L'épaisseur de la couche est de l'ordre de 50 Å.

Une seconde couche de nitrure d'aluminium est déposée de manière similaire à la première. L'épaisseur du dépôt est de l'ordre de 900 Å.

Le substrat a alors été soumis à différentes étapes de recuit sous air à 650°C pendant 10 minutes sur un support métallique avec un minimum de portance afin de permettre au verre de se déformer. Ces étapes de recuit simulent un traitement thermique de type trempe ou bombage.

Les mesures de conductivité ont été réalisées par la technique des quatre pointes et la transmission est relevée par un spectrophotomètre. La couche conductrice présente une résistivité de 5.10⁻⁴ Ohms.cm. La résistance mesurée est de 10 Ohms/carré. La transmission lumineuse est de l'ordre de 80 %.

### Exemple 2 :

Un empilage identique à celui de l'exemple 1 est réalisé, mis à part l'épaisseur de la couche conductrice qui est de 10 000 Å. La résistivité de la couche conductrice est alors de 4.10⁻⁴ Ohms.cm. La résistance est de 4 Ohms/carré. La transmission lumineuse est de 79 %.

Les échantillons traités sont minutieusement observés afin de déceler les défauts avant et après recuit. Lors des recuits à des températures n'excédant pas 650 °C, les échantillons ne présentent pas de dégradations optiques visuellement observables.

Il est en réalité surprenant d'obtenir un substrat revêtu d'une couche conductrice, déposée par un procédé sous-vide, et qui soit bombable ou trempable. Jusqu'à présent de tels substrats n'avait jamais été obtenus.

Il est encore surprenant que l'addition d'une couche métallique ou partiellement métallique et donc absorbante permet de conserver un empilage transparent après traitement thermique. Il a en fait été constaté que la couche de protection supérieure s'oxyde lors du recuit. Il a également été constaté que la couche de métal s'oxyde aussi lors du traitement thermique. Par contre la couche conductrice n'est pas détériorée par le traitement thermique et qui augmente même sa conductivité. De manière inattendue, les couches supérieures n'affectent pas la transparence de l'empilage après traitement thermique et assure malgré tout une fonction de barrière à l'oxygène pendant le traitement thermique.

## Revendications

1. Substrat transparent, notamment en verre, revêtu d'un empilage de couches, cet empilage comportant lors du dépôt :
une couche conductrice à base d'un oxyde métallique déposée par un procédé de type sous vide, et
une couche de protection choisie parmi les oxydes, les oxynitrures ou les nitrures de métaux.

2. Substrat selon la revendication précédente, **caractérisé en ce qu'**une fine couche métallique ou au moins partiellement métallique est déposée entre la couche conductrice et la couche de protection.

3. Substrat selon l'une quelconque des revendications précédentes, **caractérisé en ce que** l'oxyde métallique est dans un état sous-stoéchiométrique.

4. Substrat selon l'une quelconque des revendications précédentes, **caractérisé en ce que** l'oxyde métallique est choisi parmi l'oxyde de zinc dopé avec un élément choisi parmi l'aluminium, le fluor, le gallium, l'étain, l'indium, l'antimoine, ou les mélanges de ces éléments.

5. Substrat selon l'une quelconque des revendications précédentes, **caractérisé en ce que** l'oxyde métallique est choisi parmi l'oxyde d'étain dopé avec un élément choisi parmi l'aluminium, le fluor, le gallium, l'indium, l'antimoine ou les mélanges de ces éléments.

6. Substrat selon l'une quelconque des revendications précédentes, **caractérisé en ce que** la concentration atomique en élément dopant dans la couche conductrice est au minimum de 0.5 % et de préférence comprise entre 1 et 10 %, de manière encore préférée entre 1 et 2 %.

7. Substrat selon l'une quelconque des revendications précédentes, **caractérisé en ce que** l'épaisseur de la couche conductrice est comprise entre 50 et 5000 nm, de préférence entre 100 et 1200 nm, et de manière encore préférée entre 400 et 1100nm.

8. Substrat selon l'une quelconque des revendications précédentes, **caractérisé en ce que** l'épaisseur de la fine couche métallique est comprise entre 0.5 et 15 nm, de préférence entre 1 et 10 nm, et de manière encore préférée entre 1.5 et 6 nm.

9. Substrat selon l'une quelconque des revendications précédentes, **caractérisé en ce que** l'élément métallique de la fine couche métallique telle que déposée est choisi parmi Ti, Ni, Cr, Zn, Sn, Si, Zr, Al, In, Nb, Ta, Ce, Bi, Hf et les alliages de ces éléments.

10. Substrat selon l'une quelconque des revendications précédentes, **caractérisé en ce que** la couche de protection telle que déposée est choisie parmi les oxydes, les nitrures et les oxynitrures de titane, d'aluminium, de silicium, de zinc, d'étain, d'indium, de molybdène, de bismuth, de tantale, de cérium de niobium, de zirconium, ou de tungstène.

11. Substrat selon l'une quelconque des revendications précédentes, **caractérisé en ce que** l'épaisseur de la couche de protection est comprise entre 10 nm et 300 nm, de préférence entre 45 et 180 nm, et de manière encore préférée entre 50 et 100 nm.

12. Substrat selon l'une quelconque des revendications précédentes, **caractérisé en ce que** l'empilage comporte une sous-couche choisie parmi les oxydes, les nitrures et les oxynitrures de titane, d'aluminium, de silicium, de zinc, d'étain, d'indium, de molybdène, de bismuth, de tantale, de cérium, de niobium, de zirconium, ou de tungstène.

13. Procédé de fabrication d'un substrat transparent revêtu d'un empilage conducteur, **caractérisé par** les étapes suivantes :
a) on dépose, par un procédé de dépôt de type sous vide, une couche conductrice à base d'un oxyde métallique
b) on dépose on dépose une couche protectrice
c) on soumet le substrat à un traitement thermique de type trempe ou bombage.

14. Procédé selon la revendication précédente, **caractérisé en ce que** l'on dépose par un procédé de dépôt de type sous vide, une fine couche métallique.

15. Procédé selon l'une quelconque des revendications 13 et 14, **caractérisé en ce que** l'on dépose une sous-couche choisie parmi les oxydes, les nitrures et les oxynitrures, en particulier de titane, d'aluminium, de silicium, de zinc, d'étain, d'indium, de molybdène, de bismuth, de tantale, de cérium, de niobium, de zirconium, de tungstène.

16. Procédé selon l'une quelconque des revendications 13 à 15, **caractérisé en ce que** les dépôts sont effectués par pulvérisation cathodique de type magnétron.

17. Procédé selon l'une quelconque des revendications 12 à 14, **caractérisé en ce que** l'oxyde métallique est déposé dans une forme sous-stoéchiométrique par pulvérisation cathodique magnétron opérée dans des mélanges de gaz et dans la zone de transition métallique-réactif.

18. Utilisation d'un substrat selon l'une quelconque des revendications 1 à 11 en tant que vitrage chauffant.

19. Vitrage comportant un substrat transparent revêtu d'un empilage comportant au moins une couche conductrice à base d'un oxyde métallique, **caractérisé en ce qu'**il présente une résistance de surface < à 60 Ohms/carré.

20. Vitrage selon la revendication précédente, **caractérisé en ce qu'**il présente une transmission lumineuse > à 30 %.
